# EUROPÄISCHE PATENTSCHRIFT

(11) **EP 2 017 496 B1**
(45) Veröffentlichungstag und Bekanntmachung des Hinweises auf die Patenterteilung: **12.06.2013**
(21) Anmeldenummer: 08160054.6
(22) Anmeldetag: 10.07.2008
(51) Int. Cl.: F16F 15/123, F16F 15/134

(54) **Torsionsschwingungsdämpferanordnung**
Torsion vibration damper device
Agencement d'amortisseur de vibrations de torsions

(30) Priorität: 17.07.2007 DE 102007033164
(43) Veröffentlichungstag der Anmeldung: 21.01.2009
(73) Patentinhaber: ZF Friedrichshafen AG, 88038 Friedrichshafen (DE)
(72) Erfinder: Gierling, Detlef, 97520 Röthlein (DE); Kuhn, Stefan, 97074 Würzburg (DE); Schauder, Dr., Benedikt, 97532 Üchtelhausen-Weipoltshausen (DE); Schierling, Bernhard, 97273 Kürnach (DE)

(56) Entgegenhaltungen:
- DE-A1- 19 924 213
- FR-A1- 2 637 665
- US-A- 5 065 642
- US-A1- 2002 128 074

## Beschreibung

Die vorliegende Erfindung betrifft eine Torsionsschwingungsdämpferanordnung, umfassend eine Primärseite und eine gegen die Wirkung einer Dämpferelementenanordnung um eine Drehachse bezüglich der Primärseite drehbare Sekundärseite, wobei die Dämpferelementenanordnung eine Mehrzahl von in Umfangsrichtung aufeinander folgenden Dämpferelementeneinheiten mit jeweils wenigstens einem Dämpferelement umfasst, wobei die Dämpferelementeneinheiten in ihren Umfangsendbereichen bezüglich der Primärseite und der Sekundärseite über erste Umfangsabstützelemente abstützbar sind oder/und in Umfangsrichtung aufeinander folgende Dämpferelemente einer Dämpferelementeneinheit über zweite Umfangsabstützelemente aneinander abgestützt sind.

Bevor nachfolgend eine in den Fig. 1 und 2 dargestellte derartige Torsionsschwingungsdämpferanordnung behandelt wird, soll auf die FR 2 637 665 A1 sowie auf die US 2002/0128074 A1 eingegangen werden.

Beginnend mit der FR 2 637 665 A1, ist festzustellen, dass die darin behandelte Torsionsschwingungsdämpferanordnung eine Dämpferelementenanordnung mit einer Mehrzahl von in Umfangsrichtung aufeinander folgenden Dämpferelementeneinheiten mit jeweils einem Dämpferelement umfasst. Die Dämpferelementeneinheiten sind in ihren Umfangsendbereichen bezüglich der Primärseite und der Sekundärseite über Umfangsabstützelemente abstützbar, wobei diese Umfangsabstützelemente jeweils über einen Bereich verfügen, der mit einem Elastomer versehen ist. Dadurch soll das durch die Bewegung derUmfangsabstützelemente ausgelöste Geräusch reduziert werden. Aufgrund der exponierten Position des jeweiligen Elastomers ist dieser allerdings bei Übertragung hoher Drehmomente einem vergleichsweise hohen Verschleiß unterworfen.

Ebenfalls der Geräuschreduzierung an den Umfangsabstützelementen dient die in der US 2002/0128074 A1 gemäß den Figuren 13 bis 16 getroffene Maßnahme. Auch bei dieser Torsionsschwingungsdämpferanordnung ist eine Dämpferelementenanordnung mit einer Mehrzahl von in Umfangsrichtung aufeinander folgenden Dämpferelementeneinheiten vorgesehen. Die Dämpferelementeneinheiten verfügen jeweils über Dämpferelemente, deren jeweils einer Seite von Primärseite oder Sekundärseite zugewandte Umfangsendbereiche über je ein Elastomerelement an dieser Seite von Primärseite oder Sekundärseite angreifen. Das jeweilige Elastomerelement, das zylinder- oder kugelförmig ausgebildet sein kann, verhindert somit einen unmittelbaren Kontakt zwischen den Dämpferelementen und der zugeordneten Seite von Primärseite oder Sekundärseite.

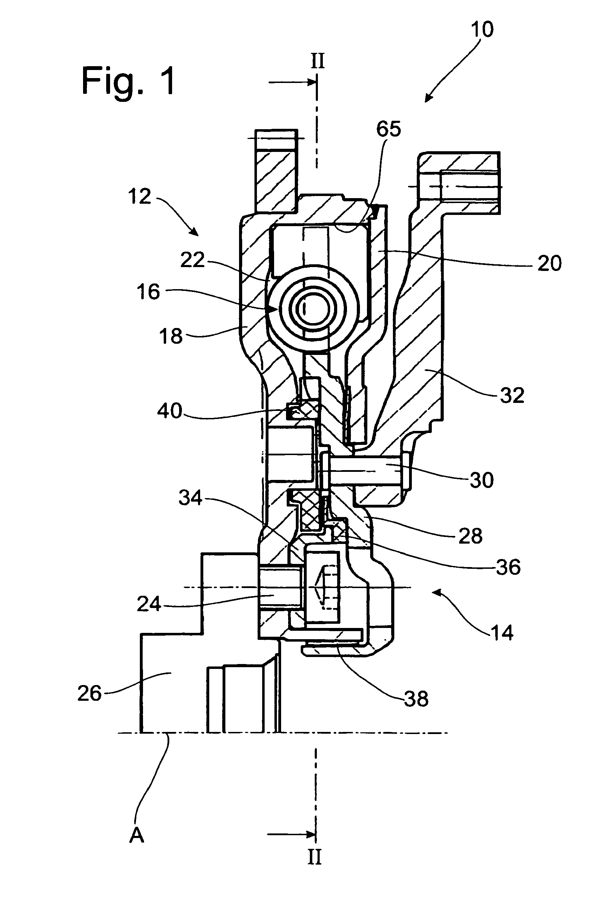

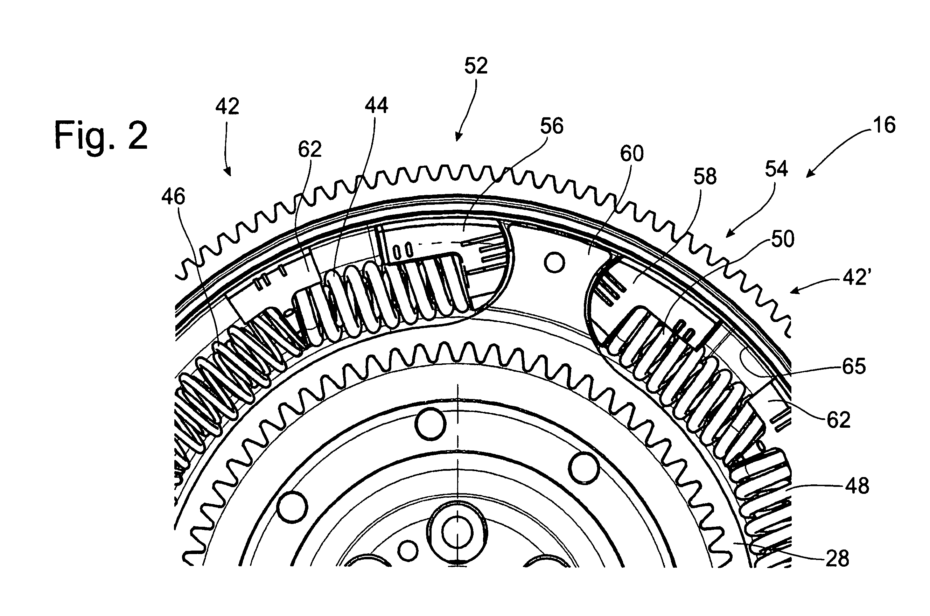

Die in den Fig. 1 und 2 dargestellte Torsionsschwingungsdämpferanordnung 10 umfasst eine Primärseite 12 sowie eine Sekundärseite 14, welche gegen die Wirkung einer Dämpferelementenanordnung 16 um eine Drehachse A bezüglich der Primärseite 12 drehbar ist.

Die Primärseite 12 umfasst zwei Deckscheibenelemente 18, 20, die radial außen miteinander fest verbunden sind und einen nach radial außen fluiddicht abgeschlossenen Volumenbereich 22 bilden, in welchem dieDämpferelementenanordnung 16 aufgenommen ist. Das Deckscheibenelement 18 ist über eine Mehrzahl von Schraubbolzen 24 an einer Antriebswelle 26, beispielsweise einer Kurbelwelle einer Brennkraftmaschine, festgelegt.

Die Sekundärseite 14 umfasst ein Zentralscheibenelement 28, das radial außen zwischen die beiden Deckscheibenelemente 18, 20 eingreift und, ebenso wie die Deckscheibenelemente 18, 20, Umfangsabstützereiche bereitstellt, welche mit der Dämpferelementenanordnung 16 zur Drehmomentübertragung zusammenwirken. Durch eine Mehrzahl von Nietbolzen 30 ist eine sekundärseitige Schwungmasse 32, welche gleichzeitig eine Widerlagerplatte für eine Reibungskupplung bilden kann, mit dem Zentralscheibenelement 28 verbunden. Ferner ist über ein Lagerelement 34 und ein Gleitlagerteil 36 die Sekundärseite 14 bezüglich der Primärseite 12 im Wesentlichen axial abgestützt. Über ein Radiallager 38 erfolgt die radiale Lagerung. Man erkennt weiter in Fig. 1, dass das Zentralscheibenelement 28 ein Hohlrad bildet, welches eine Mehrzahl von am Deckscheibenelement 18 drehbar getragenen Planetenrädern 40 bei Relativdrehung der Primärseite 12 bezüglich der Sekundärseite 14 zur Drehung antreibt. Der Volumenbereich 22, in welchem die Dämpferelementenanordnung 16 angeordnet ist, kann zumindest teilweise mit viskosem Medium, beispielsweise Fett oder dergleichen, gefüllt sein, um einerseits eine Schmierungswirkung zu erzielen, andererseits aber auch einen weiteren Beitrag zum Abbau von Schwingungsenergie zu erzeugen.

In der Fig. 2 erkennt man, dass die Dämpferelementenanordnung 16 eine Mehrzahl von in Umfangsrichtung aufeinander folgenden Dämpferelementeneinheiten 42, 42' umfasst. Beispielsweise können zwei derartige Dämpferelementeneinheiten 42, 42' vorgesehen sein, die sich nahezu über einen Winkelbereich von 180° erstrecken. Die beiden Dämpferelementeneinheiten 42, 42' sind vorzugsweise baugleich und weisen mehrere in Umfangsrichtung aufeinander folgende Dämpferelemente 44, 46, 48, 50 auf. Man erkennt in Fig. 2 bei der Dämpferelementeneinheit 42 denjenigen Bereich bzw. Endbereich 52, in welchem die beiden Dämpferelemente 44, 46 liegen, während bei der Dämpferelementeneinheit 42' derjenige Bereich bzw. Endbereich 54 erkennbar ist, in welchem die beiden Dämpferelemente 48, 50 liegen. Weiter erkennt man, dass bei jedem der Dämpferelemente 44, 46, 48, 50 eine Ineinanderschachteiung vorgesehen ist, so dass jedes Dämpferelement 44, 46, 48, 50 hier aus beispielsweise zwei ineinander geschachtelten Schraubendruckfedern aufgebaut ist. Es sei hier darauf hingewiesen, dass dies selbstverständlich nicht notwendigerweise so sein muss bzw. dass nicht alle der Dämpferelemente durch eine derartige Ineinanderschachtelung von Schraubendruckfedern gebildet sein müssen.

In ihren Umfangsendbereichen 52 bzw. 54 stützen sich die Dämpferelementeneinheiten 42, 42' über erste Umfangsabstützelemente bereitstellende Gleitschuhe 56, 58 an der Primärseite bzw. der Sekundärseite ab. Man erkennt hierzu einen am Zentralscheibenelement 28 vorgesehenen, nach radial außen greifenden armartigen Abschnitt 60, der so geformt ist, dass er mit der komplementären Form der Gleitschuhe 56, 58 zusammenwirkt und diese in Umfangsrichtung belasten kann. Entsprechende Umfangsabstützbereiche sind auch an den Deckscheibenelementen 18, 20 vorgesehen, beispielsweise durch integrale Ausgestaltung oder durch Festlegung separater Bauteile daran. Je nachdem, in welcher Relativdrehrichtung die Primärseite 12 und die Sekundärseite 14 sich gegeneinander bewegen, werden die Umfangsenden 52 der beiden Dämpferelementeneinheiten 42, 42' durch die Sekundärseite 14 belastet, während die anderen Umfangsenden 54 durch die Primärseite 12 belastet werden, oder umgekehrt.

Man erkennt weiter, dass die einzelnen Dämpferelemente 44, 46, 48, 50 in Umfangsrichtung über als zweite Umfangsabstützelemente wirksame Federteller 62 aneinander abgestützt sind. Ebenso wie die Gleitschuhe 56, 58 stützen sich die Federteller 62 nach radial außen hin an einer am Deckscheibenelement 18 der Primärseite 12 gebildeten Gleitbahn 65 ab, welche den Volumenbereich 22 nach radial außen hin begrenzt ist. Auf diese Art und Weise kann ein direkter reibender Anlagekontakt der Dämpferelementeneinheiten 42, 42' mit der Primärseite 12 bzw. der Sekundärseite 14 vermieden werden.

Vor allem in Lastwechselzuständen oder bei Auftreten von Drehmomentschwingungen findet ein permanenter Wechsel der Zusammenwirkung der Gleitschuhe 56, 58 an den beiden Endbereichen 52, 54 entweder mit der Primärseite oder der Sekundärseite statt. Ist beispielsweise ein Gleitschuh 56 zunächst durch einen einen sekundärseitigen Umfangsabstützbereich bereitstellenden Abschnitt 60 des Zentralscheibenelements 28 belastet, so wird diese Belastung bei einer Lastumkehr aufgehoben und der Abschnitt 60 tritt dann in Wechselwirkung mit dem Gleitschuh 58 am anderen Endbereich 54 der anderen Dämpferelementeneinheit 42'. Bei diesem Inkontakttreten entstehen Anschlaggeräusche vor allem deshalb, weil sowohl die Abstützbereiche an der Primärseite 12 und der Sekundärseite 14, als auch die Gleitschuhe 56, 58 aus vergleichsweise hartem Material aufgebaut sind. Während die primärseitigen und sekundärseitigen Bauteile im Allgemeinen aus Metallmaterial aufgebaut sind, sind die Gleitschuhe 56, 58 aus vergleichsweise hartem, also im Wesentlichen unverformbaren Kunststoff aufgebaut, der auch unter Berücksichtigung der Tatsache, dass es sich mit vergleichsweise geringem Gleitreibungskoeffizient entlang der Bahn 65 bewegen soll, ausgewählt ist. Auch kann bei vergleichsweise starker Relativdrehung zwischen Primärseite 12 und Sekundärseite 14 ein Zustand starker Kompression der Dämpferelementeneinheiten 42, 42' auftreten, was dazu führen kann, dass benachbarte Federteller 62 oder Federteller 62 und benachbarte Gleitschuhe 56 oder 58 gegeneinander schlagen und dabei ebenfalls Anschlaggeräusche generieren.

Es ist die Aufgabe der vorliegenden Erfindung, eine Torsionsschwingungsdämpferanordnung, bei welcher Anschlaggeräusche zwischen Umfangsabstützelementen und mit diesen in Kontakt tretenden Bauteilen gemindert sind, so auszubilden, dass der Verschleiß soweit als möglich begrenzt ist.

Die voranstehende Aufgabe wird erfindungsgemäß gelöst durch eine Torsionsschwingungsdämpferanordnung, umfassend eine Primärseite und eine gegen die Wirkung einer Dämpferelementenanordnung um eine Drehachse bezüglich der Primärseite drehbare Sekundärseite, wobei die Dämpferelementenanordnung eine Mehrzahl von in Umfangsrichtung aufeinander folgenden Dämpferelementeneinheiten mit jeweils wenigstens einem Dämpferelement umfasst, wobei die Dämpferelementeneinheiten in ihren Umfangsendbereichen an Umfangsabstützbereichen der Primärseite und der Sekundärseite abstützbar sind, wobei wenigstens ein Umfangsabstützbereich der Primärseite oder/und der Sekundärseite elastisch verformbares, anschlaggeräuschdämmendes Material wenigstens in einem Bereich aufweist, im welchem bei Relativdrehung der Primärseite bezüglich der Sekundärseite eine Dämpferelementeneinheit sich abstützt.

Durch Vorsehen von anschlaggeräuschdämmendem Material an Abstützbereichen der Primärseite bzw. der Sekundärseite können beispielsweise bei Lastwechselzuständen auftretende schlagartige Kontakte zwischen verschiedenen Bauteilen gedämpft werden, so dass dabei praktisch keine wahrnehmbaren Geräusche entstehen.

Es ist vorgesehen, dass das aufschlaggeräuschdämmende Material reibschlüssig oder/und formschlüssig gehalten ist. Dies kann beispielsweise dadurch realisiert sein, dass das aufschlaggeräuschdämmende Material einen Haltevorsprung aufweist, welcher in eine Halteaussparung eingreift. Um dabei eine besonders feste Haltewirkung zu erzielen, wird vorgeschlagen, dass der Haltevorsprung einen die Halteaussparung hintergreifenden Haltebereich bildet.

Eine übermäßige Belastung des anschlaggeräuschdämmenden Materials dann, wenn vor allem vergleichsweise große Drehmomente zu übertragen sind, kann dadurch vermieden werden, dass eine Aufnahmeaussparung vorgesehen ist, in welcher das aufschlaggeräuschdämmende Material derart aufgenommen ist, dass es im unbelasteten Zustand hervorsteht und im belasteten Zustand im Wesentlichen vollständig in der Aufnahmeaussparung aufgenommen ist.

Es ist möglich, dass das anschlaggeräuschdämmende Material kompressibel ist und beispielsweise schaumstoffartiges Material, vorzugsweise offen- oder geschlossenzelligen Elastomerschaum, oder Wabenstrukturmaterial umfasst.

Bei einer weiteren Ausgestaltungsform kann vorgesehen sein, dass das anschlaggeräuschdämmende Material eine progressiv ansteigende Reaktionskraftcharakteristik aufweist. Auch hierbei wird zunächst bei Erzeugung des Anlagekontakts durch die elastische Charakteristik für die Schalldämmungswirkung gesorgt. Bei dann weiter ansteigender Belastung zur Drehmomentübertragung wird das anschlaggeräuschdämmende Material immer härter bzw. weniger verformbar und liefert somit im Wesentlichen keinen möglicherweise zu einer undefinierten Schwingungscharakteristik führenden Dämpfungsbeitrag mehr.

Um das anschlaggeräuschdämmende Material durch wiederholtes schlagartiges Inkontakttreten mit anderen Bauteilen vor einer übermäßigen Belastung zu schützen, wird vorgeschlagen, dass das aufschlaggeräuschdämmende Material wenigstens in dem Bereich, in welchem es in Anlage an dem weiteren Bauteil kommt, mit elastischem Oberflächenschutzmaterial überzogen ist. Dabei kann beispielsweise vorgesehen sein, dass das Oberflächenschutzmaterial eine geringere Elastizität aufweist, als das aufschlaggeräuschdämmende Material.

Weiterhin kann der Aufbau der erfindungsgemäßen Torsionsschwingungsdämpferanordnung derart sein, dass wenigstens eine Seite von Primärseite oder Sekundärseite eine Gleitfläche bereitstellt, entlang welcher wenigstens ein Umfangsabstützelement bei Relativdrehung der Primärseite bezüglich der Sekundärseite sich gleitend verlagert.

Die vorliegende Erfindung wird nachfolgend mit Bezug auf die beiliegenden Zeichnungen detailliert beschrieben. Es zeigt:
- Fig. 1: eine Teil-Längsschnittansicht einer Torsionsschwingungsdämpferanordnung;
- Fig. 2: eine Teil-Querschnittsansicht der in Fig. 1 gezeigten Torsionsschwingungsdämpferanordnung, geschnitten längs einer Linie II-II;
- Fig. 3: eine Schnittansicht eines Umfangsabstützbereichs der Primärseite mit anschlaggeräuschdämmendem Material, geschnitten längs einer Linie IV - IV Fig. 4;
- Fig. 4: eine Umfangsansicht eines Umfangsabstützbereichs, wie er in Fig. 3 gezeigt ist;
- Fig. 5: eine Seitenansicht des in Fig. 3 gezeigten Umfangsabstützbereichs;
- Fig. 6: eine der Fig. 3 entsprechende Ansicht einer alternativen Ausgestltungsart eines Umfangsabstützbereichs;
- Fig. 7: eine Umfangsansicht des in Fig. 6 gezeigten Umfangsabstützbereichs;
- Fig. 8: eine der Fig. 7 entsprechende Ansicht einer alternativen Ausgestaltungsform;
- Fig. 9: eine Seitenansicht einer alternativen Ausgestaltungsart eines Umfangsabstützbereichs mit anschlaggeräusch dämmendem Material;
- Fig. 10: eine Umfangsansicht des in Fig. 9 gezeigten Umfangsabstützbereichs;
- Fig. 11: eine Schnittansicht einer Abwandlung des in Fig. 9 gezeigten Aufbaus;
- Fig. 12: eine Seitenansicht einer alternativen Ausgestaltungsart eines Umfangsabstützbereichs mit anschlaggeräuschdämmendem Material;
- Fig. 13: eine Schnittansicht des in Fig. 12 dargestellten Umfangsabstützbereichs, geschnitten längs einer Linie XIII - XIII in Fig. 12;

Im Folgenden werden verschiedene Ausgestaltungsformen von Umfangsabstützelementen, also Gleitschuhen bzw. Federtellern, beschrieben, die bei dem mit Bezug auf die Fig. 1 und 2 vorangehend beschriebenen Aufbau einer Torsionsschwingungsdämpferanordnung eingesetzt werden können. Selbstverständlich sind dabei an einer derartigen Torsionsschwingungsdämpferanordnung verschiedenste Variationen möglich, ohne von den Prinzipien der Erfindung abzuweichen.

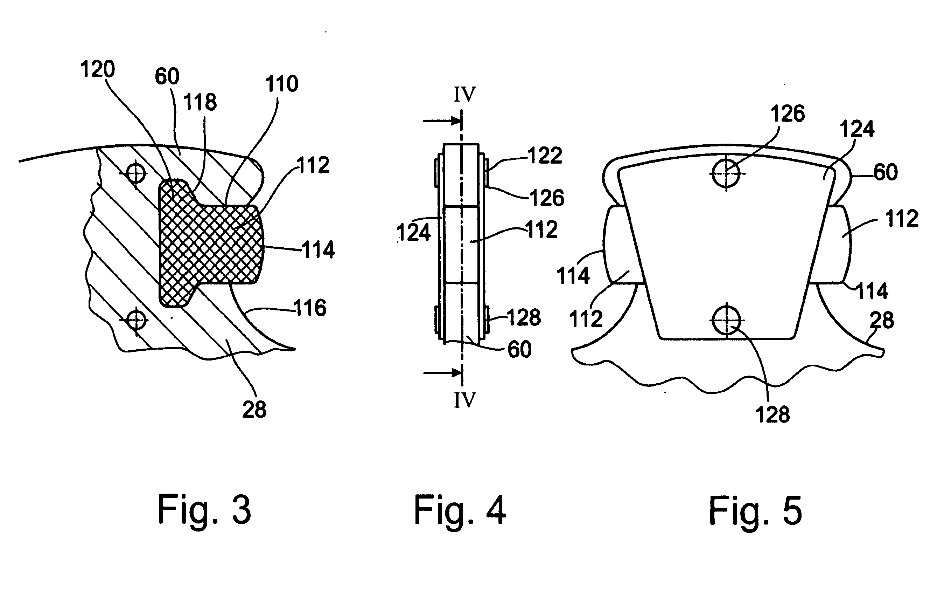

Die Fig. 3 bis 5 zeigen eine Ausgestaltungsform, bei welcher anschlaggeräuschdämmendes Material an einem sekundärseitigen Umfangsabstützbereich, also einem Abschnitt 60 des Zentralscheibenelements 28, vorgesehen ist. Man erkennt, dass in dem Abschnitt 60 vorzugsweise zu beiden Umfangsseiten hin jeweils eine Aussparung 110 vorgesehen ist, in welcher ein Anschlaggeräuschdämmungselement 112 aufgenommen ist. Dieses steht mit einem Dämmungsbereich 114 über eine Oberfläche 116 über, an welcher ein Gleitschuh mit seinem Umfangsabstützabschnitt in Anlage kommen kann. Die Aussparung 110 ist in Richtung von ihrem offenen Bereich weg sich erweiternd ausgebildet, bildet also einen Hinterschneidungsbereich 118, welchen ein sich erweiterter Halteabschnitt 120 des Anschlaggeräuschdämmungselements 112 hintergreift, so dass eine stabile Halterung realisiert ist. Um auch eine seitliche Fixierung des Anschlaggeräuschdämmungselements 112 zu erhalten, sind an beiden Seiten des Abschnitts 60 Deckplatten 122, 124 vorgesehen, die beispielsweise über Nietbolzen 126, 128 am Abschnitt 60 festgehalten sein können.

Kommt ein derart ausgebildeter Umfangsabstützbereich in Kontakt mit einem Gleitschuh, so erfolgt dies zunächst über den Dämmungsbereich 114, so dass die weitere Relativbewegung dann unter Verformung des bzw. der involvierten Anschlaggeräuschdämmungselemente 112 erfolgt. Diese können komprimiert oder derart verformt werden, dass sie dann vollständig in einer jeweiligen Aussparung 110 aufgenommen sind, wenn eine bestimmte Grenzbelastung erreicht ist, so dass weiter ansteigende Drehmomente direkt über die Oberfläche 116 übertragen werden.

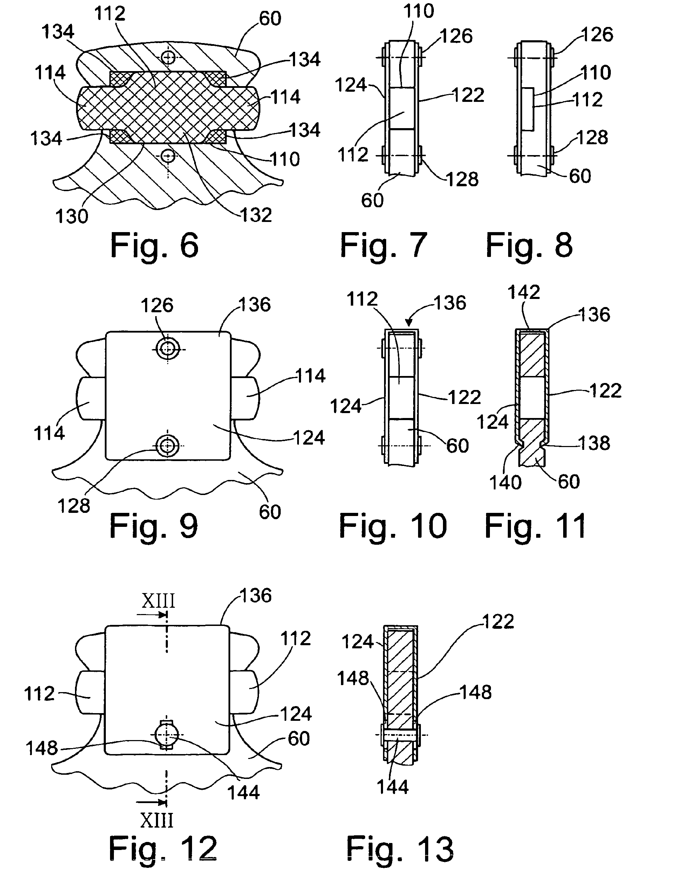

Die Fig. 6 und 7 zeigen eine alternative Ausgestaltungsform eines sekundärseitigen Umfangsabstützbereichs bzw. Abschnitts 60. Auch hier ist wieder eine Aussparung 110 vorgesehen, die nunmehr jedoch in Umfangsrichtung durchgehend ist. Ein Anschlaggeräuschdämmungselement 112 ist so geformt, dass es beidseits in Umfangsrichtung aus der Aussparung 110 hervorstehende Dämmungsbereiche 114 aufweist. Ein zentraler, erweiterter Bereich 130 der Aussparung 110 nimmt einen entsprechenden zentralen und erweiterten Bereich 132 des Anschlaggeräuschdämmungselements 112 auf, wobei man in Fig. 6 erkennt, dass die Umfangserstreckung dieses zentralen Bereichs 132 des Anschlaggeräuschdämmungselements 112 kleiner bemessen ist, als die entsprechende Erweiterung 130 der Aussparung 60. Die frei bleibenden Bereiche sind mit elastischem Material 134 gefüllt.

Bei dieser Ausgestaltungsform kann beispielsweise das Anschlaggeräuschdämmungselement 112 aus vergleichsweise starrem Material aufgebaut sein, beispielsweise aus einem Material, wie dies auch für die Gleitschuhe bzw. Federteller verwendet wird. Die Anschlaggeräuschdämmung erfolgt dann durch die Umfangsverschiebbarkeit bei Herstellung eines Kontakts mit einem Gleitschuh unter Verformung jeweils des elastischen Materials 134, welches in Umfangsrichtung dann belastet wird und somit eine Verschiebung des Umfangsabstützelements 112 bezüglich des Abschnitts 60 zulässt. Bei einer alternativen Variante könnte das Umfangsabstützelement 112 aus elastisch verformbarem Material, beispielsweise jedoch nicht kompressiblem Material gebildet sein. Bei Belastung wird dieses sich verformen und in diejenigen Bereiche ausweichen können, in welchen das elastisch verformbare und dabei auch kompressible Material 134 aufgenommen ist.

Die Fig. 7 zeigt, dass die Aussparung 110 sich über die gesamte Dicke des Abschnitts 60 hindurcherstreckt, so dass der radial außerhalb der Aussparung 110 liegende Teil des Abschnitts 60 von dem radial innerhalb der Aussparung 110 liegenden Teil vollständig getrennt ist. Die beiden Deckplatten 122, 124 erfüllen dabei also zusätzlich auch eine Tragefunktion für diesen radial äußeren Teil. Bei der in Fig. 8 gezeigten Variante findet eine derartige Auftrennung nicht statt. Die Aussparung 110 ist so dimensioniert, dass sie zumindest in Umfangsbereichen sich nicht über die vollständige Dicke des Abschnitts 60 hinwegerstreckt, so dass ein integraler Verbund des radial äußeren und des radial inneren Teils besteht.

Die Fig. 9 und 10 zeigen eine weitere alternative Ausgestaltungsform, bei welcher die beiden Deckplatten 122, 124 die beiden Schenkel eines U-förmigen Halteteils 136 bilden. Dieses übergreift den radial äußeren Teil des Abschnitts 60 radial außen und trägt somit zusätzlich zu dessen Fixierung bei. Es ist selbstverständlich, dass ein derartiges U-förmiges Halteteil auch bei der in Fig. 3 bis 5 gezeigten Ausgestaltungsform vorgesehen sein kann.

Die Fig. 11 zeigt eine Abwandlung, bei welcher dieses U-förmige Halteteil 136 nicht durch Nietbolzen oder dergleichen am Abschnitt 60 gehalten ist, sondern durch an den radial inneren Endbereichen der Halteplatten 122, 124 gebildete Abbiegungen 138, 140, die in entsprechende Nuten des Abschnitts 60 eingreifen. Da hier eine Nietverbindung nicht vorgesehen ist, ist diese Ausgestaltungsform vor allem in Verbindung mit der Ausgestaltung des Abschnitts 60, wie sie in Fig. 8 gezeigt ist, vorteilhaft.

Die in den Fig. 9 bis 11 gezeigten Ausgestaltungsformen mit einem U-förmigen Halteteil können auch so ausgebildet sein, dass radial außerhalb des Anschlaggeräuschdämmungselements 112 kein weiterer Bereich des Abschnitts 60 liegt. Das heißt, der die beiden Halteplatten 122, 124 verbindende Steg 142 des U-förmigen Halteteils kann gleichzeitig auch die direkte Halterungsfunktion für das Anschlaggeräuschdämmungselement 112 bzw. ggf. mehrere derartige Anschlaggeräuschdämmungselemente 112 bereitstellen.

Die Fig. 12 und 13 zeigen schließlich eine Variante, bei welcher ein derartiges U-förmiges Halteteil 136 nicht fest am Abschnitt 60 getragen ist. Vielmehr ist am Abschnitt 60 ein beispielsweise durch einen Nietbolzen gebildeter Führungsstift 144 vorgesehen, welcher in langlochartige Aussparungen 146, 148 der Halteplatten 122, 124 eingreift. Hier ist also grundsätzlich eine Radialverschiebbarkeit des U-förmigen Halteteils ermöglicht, was beispielsweise dann von Vorteil ist, wenn ein oder beide Anschlaggeräuschdämmungselemente 112 aus nicht kompressiblem Material aufgebaut sind und mithin bei Belastung durch die Möglichkeit, den radial äußeren Teil des Abschnitts 60 auch nach radial außen zu verlagern, eine Ausweichbewegung möglich ist. Ist der radial äußere Teil mit dem radial inneren Teil des Abschnitts 60 fest verbunden, wie dies beispielsweise in den Fig. 3 und 8 der Fall ist, so kann die Radialverlagerbarkeit des U-förmigen Haltebereichs 136 dazu genutzt werden, unter Fliehkrafteinwirkung eine zusätzliche Dämpfungswirkung durch Anlage desselben an der Gleitbahn 65 zu erreichen.

Es sei darauf hingewiesen, dass derartige Ausgestaltungen, bei welchen anschlaggeräuschdämmendes Material, also ein Anschlaggeräuschdämmungselement 112, in einen Umfangsabstützbereich integriert ist, selbstverständlich auch an der Primärseite vorgesehen sein können. Es könnten dann Bauteile, welche in ihrem Aufbau den in den Fig. 3 bis 13 gezeigten Abschnitten 60 entsprechen, jeweils an den beiden Deckscheibenelementen, wie sie in Fig. 1 auch erkennbar sind, festgelegt werden, um auf diese Art und Weise auch eine anschlaggeräuschgedämmte Zusammenwirkung jeweils mittels Gleitschuh mit der Primärseite zu erlangen.

## Patentansprüche

1. Torsionsschwingungsdämpferanordnung, umfassend eine Primärseite (12) und eine gegen die Wirkung einer Dämpferelementenanordnung (16) um eine Drehachse (A) bezüglich der Primärseite (12) drehbare Sekundärseite (14), wobei die Dämpferelementenanordnung (16) eine Mehrzahl von in Umfangsrichtung aufeinander folgenden Dämpferelementeneinheiten (42, 42') mit jeweils wenigstens einem Dämpferelement (44, 46, 48, 50) umfasst, wobei die Dämpferelementeneinheiten (42, 42') in ihren Umfangsendbereichen (52, 54) an Umfangsabstützbereichen der Primärseite und der Sekundärseite abstützbar sind, wobei wenigstens ein Umfangsabstützbereich (60) der Primärseite (12) oder/und der Sekundärseite (14) elastisch verformbares, anschlaggeräuschdämmendes Material (112) wenigstens in einem Bereich aufweist, in welchem bei Relativdrehung der Primärseite (12) bezüglich der Sekundärseite (14) eine Dämpferelementeneinheit (42, 42') sich abstützt,
**dadurch gekennzeichnet,**
**dass** das aufschlaggeräuschdämmende Material (112) reibschlüssig oder/und formschlüssig gehalten ist und einen Haltevorsprung (120) aufweist, welcher in eine Halteaussparung (110) eingreift, und dass eine Aufnahmeaussparung (110) vorgesehen ist, in welcher das aufschlaggeräuschdämmende Material (112) derart aufgenommen ist, dass es im unbelasteten Zustand hervorsteht und im belasteten Zustand im Wesentlichen vollständig in der Aufnahmeaussparung (110) aufgenommen ist.

2. Torsionsschwingungsdämpferanordnung nach Anspruch 1,
**dadurch gekennzeichnet, dass** der Haltevorsprung (120) einen die Halteaussparung (110) hintergreifenden Haltebereich (120) bildet.

3. Torsionsschwingungsdämpferanordnung nach einem der Ansprüche 1 oder 2,
**dadurch gekennzeichnet, dass** das aufschlaggeräuschdämmende Material (112) inkompressibel ist.

4. Torsionsschwingungsdämpferanordnung nach einem der Ansprüche 1 oder 2, bei welchem das aufschlaggeräuschdämmende Material (112) kompressibel ist,
**dadurch gekennzeichnet, dass** das aufschlaggeräuschdämmende Material (112) schaumstoffartiges Material, vorzugsweise offen- oder geschlossenzelliger Elastomerschaum, oder Wabenstrukturmaterial ist.

5. Torsionsschwingungsdämpferanordnung nach einem der Ansprüche 1 bis 4,
**dadurch gekennzeichnet, dass** das anschlaggeräuschdämmende Material (112) eine progressiv ansteigende Reaktionskraftcharakteristik aufweist.

6. Torsionsschwingungsdämpferanordnung nach einem der Ansprüche 1 bis 5,
**dadurch gekennzeichnet, dass** das aufschlaggeräuschdämmende Material (112) wenigstens in dem Bereich, in welchem es in Anlage an dem weiteren Bauteil kommt, mit elastischem Oberflächenschutzmaterial überzogen ist.

7. Torsionsschwingungsdämpferanordnung nach Anspruch 6,
**dadurch gekennzeichnet, dass** das Oberflächenschutzmaterial eine geringere Elastizität aufweist, als das aufschlaggeräuschdämmende Material (112).

8. Torsionsschwingungsdämpferanordnung nach einem der Ansprüche 1 bis 7,
**dadurch gekennzeichnet, dass** wenigstens eine Seite von Primärseite (12) oder Sekundärseite (14) eine Gleitfläche (65) bereitstellt, entlang welcher wenigstens ein Umfangsabstützelement (56, 58; 62) bei Relativdrehung der Primärseite (12) bezüglich der Sekundärseite (14) sich gleitend verlagert.

## Claims

1. Torsional vibration damper arrangement, comprising a primary side (12) and a secondary side (14) which is rotatable relative to the primary side (12) about an axis of rotation (A) counter to the action of a damper element arrangement (16), wherein the damper element arrangement (16) comprises a multiplicity of damper element units (42, 42') which are arranged in succession in a circumferential direction and which have in each case at least one damper element (44, 46, 48, 50), wherein the damper element units (42, 42') can be supported in their circumferential end regions (52, 54) on circumferential support regions of the primary side and of the secondary side, wherein at least one circumferential support region (60) of the primary side (12) and/or of the secondary side (14) has elastically deformable impact-noise-deadening material (112) at least in a region in which a damper element unit (42, 42') is supported during a relative rotation of the primary side (12) with respect to the secondary side (14), **characterized**
**in that** the impact-noise-deadening material (112) is held in a frictionally engaging and/or form-fitting manner and has a retaining projection (120) which engages into a retaining cutout (110), and in that a receiving cutout (110) is provided in which the impact-noise-deadening material (112) is received in such a way that it protrudes in the unloaded state and is received substantially completely in the receiving cutout (110) in the loaded state.

2. Torsional vibration damper arrangement according to Claim 1, **characterized in that** the retaining projection (120) forms a retaining region (120) which engages behind the retaining cutout (110).

3. Torsional vibration damper arrangement according to either of Claims 1 and 2,
**characterized in that** the impact-noise-deadening material (112) is incompressible.

4. Torsional vibration damper arrangement according to one of Claims 1 or 2, in which the impact-noise-deadening material (112) is compressible,
**characterized in that** the impact-noise-deadening material (112) is foamed material, preferably open-pored or closed-pored elastomer foam, or honeycomb structure material.

5. Torsional vibration damper arrangement according to one of Claims 1 to 4,
**characterized in that** the impact-noise-deadening material (112) has a progressively rising reaction force characteristic.

6. Torsional vibration damper arrangement according to one of Claims 1 to 5,
**characterized in that** the impact-noise-deadening material (112) is coated, at least in the region in which it comes into contact with the further component, with elastic surface-protecting material.

7. Torsional vibration damper arrangement according to Claim 6,
**characterized in that** the surface-protecting material has a lower elasticity than the impact-noise-deadening material (112).

8. Torsional vibration damper arrangement according to one of Claims 1 to 7,
**characterized in that** at least one side of primary side (12) or secondary side (14) provides a sliding surface (65) along which at least one circumferential support element (56, 58; 62) moves in sliding fashion during a relative rotation of the primary side (12) with respect to the secondary side (14).

## Revendications

1. Agencement amortisseur de vibrations de torsion, comprenant un côté primaire (12) et un côté secondaire (14) pouvant tourner par rapport au côté primaire (12) autour d'un axe de rotation (A) à l'encontre de l'action d'un agencement d'éléments amortisseurs (16), l'agencement d'éléments amortisseurs (16) comprenant une pluralité d'unités d'éléments amortisseurs (42, 42') successives dans la direction périphérique ayant chacune au moins un élément amortisseur (44, 46, 48, 50), les unités d'éléments amortisseurs (42, 42') pouvant être supportées dans leurs régions d'extrémité périphérique (52, 54) sur des régions de support périphérique du côté primaire et du côté secondaire, au moins une région de support périphérique (60) du côté primaire (12) et/ou du côté secondaire (14) présentant un matériau élastiquement déformable amortissant les bruits de butée (112) au moins dans une région dans laquelle s'appuie une unité d'éléments amortisseurs (42, 42') lors d'une rotation relative du côté primaire (12) par rapport au côté secondaire (14),
**caractérisé en ce que**
le matériau amortissant les bruits de butée (112) est maintenu par engagement par friction et/ou par coopération de forme et présente une saillie de retenue (120), qui vient en prise dans un évidement de retenue (110) et **en ce qu'**il est prévu un évidement de réception (110) dans lequel le matériau amortissant les bruits de butée (112) est reçu de telle sorte qu'il fasse saillie dans l'état non sollicité et qu'il soit essentiellement complètement reçu dans l'évidement de réception (110) dans l'état sollicité.

2. Agencement amortisseur de vibrations de torsion selon la revendication 1, **caractérisé en ce que** la saillie de retenue (120) forme une région de retenue (120) venant en prise par l'arrière avec l'évidement de retenue (110).

3. Agencement amortisseur de vibrations de torsion selon l'une quelconque des revendications 1 ou 2, **caractérisé en ce que** le matériau amortissant les bruits de butée (112) est incompressible.

4. Agencement amortisseur de vibrations de torsion selon l'une quelconque des revendications 1 ou 2, dans lequel le matériau amortissant les bruits de butée (112) est compressible, **caractérisé en ce que** le matériau amortissant les bruits de butée (112) est un matériau de type mousse, de préférence une mousse élastomère à pores ouverts ou fermés ou un matériau à structure en nid d'abeilles.

5. Agencement amortisseur de vibrations de torsion selon l'une quelconque des revendications 1 à 4, **caractérisé en ce que** le matériau amortissant les bruits de butée (112) présente une caractéristique de force de réaction augmentant progressivement.

6. Agencement amortisseur de vibrations de torsion selon l'une quelconque des revendications 1 à 5, **caractérisé en ce que** le matériau amortissant les bruits de butée (112) est recouvert d'un matériau de protection de surface élastique au moins dans la région dans laquelle il vient en appui contre l'autre composant.

7. Agencement amortisseur de vibrations de torsion selon la revendication 6, **caractérisé en ce que** le matériau de protection de surface présente une plus faible élasticité que le matériau amortissant les bruits de butée (112).

8. Agencement amortisseur de vibrations de torsion selon l'une quelconque des revendications 1 à 7, **caractérisé en ce qu'**au moins un côté, le côté primaire (12) ou le côté secondaire (14), constitue une surface de glissement (65) le long de laquelle se déplace en glissant au moins un élément de support périphérique (56, 58 ; 62) lors de la rotation relative du côté primaire (12) par rapport au côté secondaire (14).
